# EUROPÄISCHE PATENTSCHRIFT

(11) **EP 4 501 166 B1**
(45) Veröffentlichungstag und Bekanntmachung des Hinweises auf die Patenterteilung: **24.09.2025**
(21) Anmeldenummer: 23188956.9
(22) Anmeldetag: 01.08.2023
(51) Int. Cl.: A45C 13/02, A45C 5/02, A45C 5/03, B29C 44/12, B29C 44/14

(54) **SCHALENKOFFER MIT SCHAUMEINLAGE**
LUGGAGE CASE WITH FOAM INSERT
VALISE À COQUE AVEC INSERT EN MOUSSE

(43) Veröffentlichungstag der Anmeldung: 05.02.2025
(73) Patentinhaber: W.AG Funktion + Design GmbH, 36419 Geisa (DE)
(72) Erfinder: ULLRICH, Björn, 36115 Ehrenberg (DE); HARTMANN, Robert, 37339 Leinefelde-Worbis (DE); PUCH, Florian, 99423 Weimar (DE)
(74) Vertreter: Walther Bayer Faber Patentanwälte PartGmbB

(56) Entgegenhaltungen:
- WO-A2-2020/206312
- DE-A1- 19 546 397
- DE-A1- 3 512 017
- DE-B1- 3 002 560
- US-A- 5 872 557
- US-A1- 2020 407 144
- US-B1- 6 547 070
- US-B2- 11 375 785

## Beschreibung

Die Erfindung betrifft einen Schalenkoffer mit einem ersten Schalenkörper aus einem Kunststoffwerkstoff und einem gelenkig mit diesem verbundenen zweiten Schalenkörper aus einem Kunststoffwerkstoff, wobei in wenigstens einem der Schalenkörper zumindest eine Schaumeinlage eingebracht ist, wobei wenigstens eine der Schaumeinlagen aus einem Polyurethanwerkstoff gebildet ist.

### STAND DER TECHNIK

Beispielsweise zeigt die EP 3 135 150 B1 einen gattungsbildenden Schalenkoffer mit einem ersten und einem zweiten Schalenkörper, die über ein Gelenk beweglich miteinander verbunden sind und mittels eines Verschlusses gegeneinander verschlossen werden können. In der Regel sind Schalenkoffer, die zu Aufbewahrungs- und Transportzwecken diesen, mit Schaumstoff ausgekleidet, der Vertiefungen und Aufnahmeöffnungen aufweist, in die die mit dem Schalenkoffer aufzubewahrende und zu transportierende meist empfindlichen Gegenstände eingesetzt werden können. Derartige Schalenkoffer weisen entweder zwei zueinander etwa gleich ausgebildete Schalenkörper auf, die jeweils mit entsprechenden Schaumeinlagen gefüllt sein können, oder es ist wenigstens ein unterer Schalenkörper mit einer Schaumeinlage ausgekleidet, in die die aufzunehmenden Gegenstände eingesteckt werden können, und in einem oberen Schalenkörper befindet sich eine Schaumeinlage, die eine Andrückstruktur aufweist, um bei verschlossenem Schalenkoffer die in der unterseitigen Schaumeinlage eingebrachten Gegenstände in den Vertiefungen zu sichern. Schalenkoffer der hier interessierenden Art können insofern aber auch nur eine Schaumeinlage in einem der beiden Schalenkörper aufweisen.

Aus der DE 35 11 931 A1 ist ein Schalenkoffer mit einem ersten und einem beweglich zu diesem angeordneten zweiten Schalenkörper bekannt, und die Schalenkörper sind mit einer Schaumeinlage ausgekleidet, die hergestellt ist aus einem Polyurethanwerkstoff, der einen Hartschaum bildet und die mehreren Bestandteile der jeweiligen Schalenkörper zusammenhält. Polyurethanwerkstoffe werden dabei in an sich bekannter Weise aus einem Reaktionsgemisch wenigstens umfassend Polyol und Isocyanat hergestellt.

Bei modernen Schalenkoffern werden die Schalenkörper in der Regel einteilig aus einem Kunststoffwerkstoff hergestellt, beispielsweise aus Polypropylen. Werden die Schalenkörper noch mit Folien, Matten, Aufklebern oder sonstigen Trägerkörpern für Grafiken behaftet, und wird die Schaumeinlage aus Polyurethan in den Schalenkörper eingeschäumt, sodass dieser eine Klebeverbindung zum Schalenkörper eingeht, ergeben sich erhebliche Nachteile beim Recyceln des Schalenkoffers, da die unterschiedlichen Werkstoffe nicht mehr voneinander getrennt werden können.

Aus der DE 200 02 830 U1 ist ein Schalenkoffer mit einem ersten Schalenkörper und einem gelenkig mit diesem verbundenen zweiten Schalenkörper bekannt, wobei in den Schalenkörpern innenseitig Schaumeinlagen eingebracht sind. Die Schaumeinlagen werden dabei in der Regel in die Innenseiten der Schalenkörper eingeklebt.

Die DE 195 46 397 A1 offenbart ebenfalls einen Schalenkoffer mit einem ersten Schalenkörper und einem gelenkig mit diesem verbundenen zweiten Schalenkörper, wobei die Schalenkörper selbst aus einem Polyurethan gebildet sind, die außenseitig mit einer Lederschicht behaftet sind.

Die DE 35 12017 A1 offenbart einen Schalenkoffer mit einem ersten Schalenkörper und einem gelenkig mit diesem verbundenen zweiten Schalenkörper jeweils aus Kunststoff, wobei in den Schalenkörpern eine Schaumeinlage eingebracht ist, und wobei die Schaumeinlagen mittels eines geometrischen Formschlusses in zumindest einem der Schalenkörper selbsthaltend eingebracht sind.

### OFFENBARUNG DER ERFINDUNG

Aufgabe der Erfindung ist die Verbesserung des Aufbaus und der Materialwahl eines Schalenkoffers sowie die Verbesserung eines Verfahrens zur Herstellung eines solchen Schalenkoffers gemäß Anspruch 11, wobei der Schalenkoffer und das Verfahren so bereitgestellt und ausgeführt werden sollen, dass eine einfache Trennung der Bestandteile des Schalenkoffers möglich ist und ein Recycling der Werkstoffe stattfinden kann. Der Schalenkoffer selbst soll dabei möglichst geringfügig umweltbelastend sein.

Diese Aufgabe wird ausgehend von einem Schalenkoffer gemäß Anspruch 1 und ausgehend von einem Verfahren zur Herstellung eines solchen Schalenkoffers gemäß Anspruch 11 gelöst. Vorteilhafte Weiterbildungen der Erfindung sind in den abhängigen Ansprüchen angegeben.

Die Erfindung schließt die technische Lehre ein, dass der Kunststoffwerkstoff des ersten und zweiten Schalenkörpers ein Polypropylen umfasst, wobei die wenigstens eine Schaumeinlage mittels eines geometrischen Formschlusses und/oder mittels eines Reibschlusses in zumindest einem der Schalenkörper selbsthaltend eingebracht ist, wobei der Schalenkörper einen im Schalenkörper definierbaren Innenraum zumindest teilweise umschließt, wobei im Innenraum wenigstens abschnittsweise oder lokal ein Hinterschnittbereich gebildet ist, in den die Schaumeinlage zumindest teilweise hineinragt, wobei der Hinterschnittbereich zumindest teilweise mittels einer Haltestruktur gebildet ist, die in den Innenraum hineinragt und wobei die Haltestruktur materialeinheitlich und einteilig mit dem Schalenkörper mittels einer Spritzgießherstellung erzeugt ist.

Die Schalenkörper und die wenigstens eine Schaumeinlage können geometrisch so bestimmt werden, dass die Schaumeinlagen in den Schalenkörpern mittels einem geometrischen Formschluss selbsthaltend eingebracht werden, sodass ohne Verwendung von Klebemitteln oder ohne das direkte und haftungserzeugende Anschäumen der Schaumeinlage an die Innenoberfläche der Schalenkörper die Schaumeinlage im Schalenkörper einsitzt.

Auch mittels eines Reibschlusses kann eine haltende Anordnung der Schaumeinlage im Schalenkörper erzeugt werden, was insbesondere dadurch begünstigt wird, dass die Schaumeinlage aus dem Reaktionsgemisch aufschäumt, was zu einer Art Verklemmung oder Verspannung der Schaumeinlage zwischen Lamellen, Stegen, Domen oder sonstigen Geometrien im Schalenkörper führt und so die haltende Anordnung erzeugt wird.

So kann die Schaumeinlage bei einem Recycling des Schalenkoffers auf einfache Weise aus dem Schalenkörper entnommen werden, ohne dass Teile der Schaumeinlage auf der Innenoberfläche des Schalenkörpers haften bleiben und gegebenenfalls nicht mehr entfernt werden können. Eine rückstandsfreie Trennung von Schaumeinlage und Schalenkörper ist sodann sichergestellt.

Mit besonderen Vorteil kann die Schaumeinlage direkt in den ersten und/oder zweiten Schalenkörper aufgeschäumt werden. Dabei kann die Innenoberfläche des Schalenkörpers, gegen die das Reaktionsgemisch zur Bildung des Polyurethanwerkstoffes aufschäumt, vor dem Aufschäumen mit einem Trennmittel behaftet werden. Auch ist es möglich, dass die Innenoberfläche zur Meidung einer chemischen Verbindung des Werkstoffes des Schalenkörpers mit der Schaumeinlage chemisch behandelt wird, um ein Anhaften der Schaumeinlage im Schalenkörper zu vermeiden.

Der Polyurethanwerkstoff wird in an sich bekannter Weise aus einem Reaktionsgemisch aufgeschäumt, das zumindest aus den Hauptbestandteilen Polyol und Isocyanat erzeugt wird. Durch eine gezielte Spezifikation des Polyols und dem Mengenverhältnis aus dem Polyol und dem Isocyanat können Schaumeinlagen mit verschiedenen Härten hergestellt werden.

Der hier verwendete Begriff des Hartschaumes betrifft einen mit härteren Formeigenschaften ausgeführten elastischen Formschaumstoff. Insbesondere weist dieser härtere elastische Formschaumstoff als wesentliche Parameter eine spezielle Dichte und/oder eine spezielle Stauchhärte auf. Die Dichte kann beispielsweise einen Wert von 0,04 g/cm3 bis 0,08 g/cm3, bevorzugt von 0,05 g/cm3 bis 0,07 g/cm3, weiter bevorzugt von 0,055 g/cm3 bis 0,065 g/cm3 und besonders bevorzugt von 0,06 g/cm3 auf. Die Stauchhärte weist bei 10% Stauchung einen Druckwert von zum Beispiel 7,5 kPa, bei 25% von zum Beispiel 13 kPa und bei 50% von zum Beispiel 35 kPa auf, wobei die angegebenen Werte um beispielsweise 15% oder 10% oder 5% nach unten und nach oben abweichen können. Die Zellform des härteren elastischen Formschaumstoffes ist insbesondere offenporig.

Der Begriff des Weichschaumes betrifft einen mit weicheren Formeigenschaften ausgeführten elastischen Formschaumstoff. Insbesondere weist dieser weichere elastische Formschaumstoff als wesentliche Parameter ebenfalls eine spezielle Dichte und/oder eine spezielle Stauchhärte auf. Die Dichte kann beispielsweise einen Wert von 0,03 g/cm3 bis 0,07 g/cm3, bevorzugt von 0,04 g/cm3 bis 0,06 g/cm3, weiter bevorzugt von 0,045 g/cm3 bis 0,055 g/cm3 und besonders bevorzugt von 0,05 g/cm3 auf. Die Stauchhärte weist bei 10% Stauchung einen Druckwert von zum Beispiel 3,9 kPa, bei 25% von zum Beispiel 6 kPa und bei 50% von zum Beispiel 11 kPa auf, wobei die angegebenen Werte um beispielsweise 15% oder 10% oder 5 % nach unten und nach oben abweichen können. Die Zellform des härteren elastischen Formschaumstoffes ist insbesondere offenporig.

Generell sind der Hartschaum und der Weichschaum in der hier interessierenden Verwendung reversibel verformbar. Wenn sich der Formschaumstoff durch Druck verformt, geht er wieder in seine Ausgangsform zurück, sobald der Druck entfällt. Industriell gehandelter Hartschaum hingegen ist irreversibel, da dieser nicht beliebig verformt werden kann, sondern dieser bleibt in seiner Ausgangsform. Nach dieser Definition sind beide hier interessierenden Schäume eigentlich Weichschäume, diese sollen aber durch die Begriffe Hartschaum und Weichschaum anhand der obenstehend und nachfolgend definierten Stoffeigenschafften und Herstellungsverfahren als Hartschaum und Weichschaum bezeichnet und voneinander unterschieden werden.

So ist es beispielsweise denkbar, dass das Polyol zur Bildung des Reaktionsgemisches mit einer Hydroxylzahl von 90 mg KOH/g bis 130 mg KOH/g und/oder von 100 mg KOH/g bis 120 mg KOH/g und/oder von 106 mg KOH/g bis 114 mg KOH/g und/oder von 109,6 mg KOH/g bereitgestellt wird, sodass das Reaktionsgemisch abschließend zu einem Hartschaum aufschäumt.

Die Schaumeinlage, die insbesondere aus dem Hartschaum hergestellt ist, kann wenigstens eine Vertiefung aufweisen, die von einer durch den Rand umschlossenen Öffnung zugänglich ist. Der Hartschaum kann beispielsweise zur unmittelbaren Aufnahme von empfindlichen Gegenständen dienen, die in dem Schalenkoffer aufbewahrt oder mit diesem transportiert werden, wofür in der Schaumeinlage aus Hartschaum entsprechende Vertiefungen eingebracht werden können, die in ihrer Kontur bestenfalls den aufzunehmenden Gegenständen angepasst sind.

Polyol wird in der Regel als eine organische Verbindung bereitgestellt, die aus mehreren Hydroxylgruppen (OH-Gruppen) aufgebaut ist. Die Hydroxylzahl gibt dabei die Anzahl der Hydroxylgruppen an. Ab vier Hydroxylgruppen wird im Allgemeinen der Begriff des Polyols verwendet, wobei die Herstellung von Polyolen entweder auf Basis von Mineralölen oder auf Pflanzenölbasis erfolgen kann. Je höher die Hydroxylzahl, also die Anzahl der Hydroxylgruppen für das Polyol ist, desto härter kann der Polyurethanwerkstoff aufschäumen, da eine höhere Hydroxylzahl eine höhere Bindungsdichte bewirkt, was zu einer höheren Härte der Schaumeinlage führt. Als besonders vorteilhaft hat sich herausgestellt, dass die Hydroxylzahl einen Wert von 90 mg KOH/g bis 130 mg KOH/g, bevorzugt von 100 mg KOH/g bis 120 mg KOH/g, besonders bevorzugt von 106 mg KOH/g bis 114 mg KOH/g und am meisten bevorzugt von 109,6 mg KOH/g beträgt, da damit ein Polyurethanwerkstoff geschaffen werden kann, der eine Härte aufweist, über die die Schaumeinlage auf einfache Weise vom Schalenkörper gelöst werden kann, aber im Schalenkörper selbsthaltende Eigenschaften bietet, erfindungsgemäß also über einen geometrischen Formschluss oder einen Reibschluss, wofür die Schaumeinlage mit den genannten Spezifikationen der Ausgangsstoffe geeignet ist.

Vorzugsweise wird das Polyol wenigstens teilweise aus nachwachsenden Rohstoffen bereitgestellt oder mit diesen versetzt, insbesondere umfassend natürliche Öle, Stärke, Zucker, Biopolymere und/oder beispielsweise auch Lignine. Polyole der hier interessierenden Gattung können Polyether, Polyester oder im Allgemeinen Biopolyole basierend auf nachwachsenden Rohstoffen umfassen bzw. aus diesen gebildet werden. Werden derartige Polyole verwendet, können daraus Bio-Polyurethanwerkstoffe hergestellt werden, die im Sinne der vorliegenden Erfindung für den Schalenkoffer als Schaumeinlage zur Anwendung kommen sollen. Insofern können Polyole auch aus natürlichem Rapsöl, Palmöl oder Tallöl gebildet werden, auch als Tallol oder flüssiges Kolophonium bekannt. Derartige Stoffe fallen insbesondere in großen Mengen als Nebenprodukt bei der Holzzellstoff- und Papierproduktion an. Ferner ist es möglich, Polyole aus Rizinus-, Lein- und Sojaöl abzuleiten, womit ebenfalls biologisch generierte Basisstoffe für das Polyol und insofern auch für den Polyurethanwerkstoff geschaffen werden können. Derartige Polyole zur Bildung von Polyurethanwerkstoffen sind für den erfindungsgemäßen Schalenkoffer von besonderem Vorteil, da die Schaumeinlagen in der Regel zur geschützten Aufbewahrung von empfindlichen technischen Einrichtungen dienen, und die Schaumeinlagen müssen insofern keine weiteren Spezifikationen erfüllen, wie diese beispielsweise im Lebensmittelbereich erforderlich sind.

Das hier interessierende Polyol insbesondere zur Bildung des Hartschaums für die Schaumeinlage kann mit einem Molekulargewicht von 600 bis 1400 g/mol und/oder 800 bis 1200 g/mol und/oder 900 bis 1100 g/mol und/oder 1000 g/mol bereitgestellt werden. Das Optimum für den zu erzeugenden Hartschaum sind 1000 g/mol als Molekulargewicht für das Polyol. Mit Bezug auf die Koordinationszahl kann zur Bildung des Hartschaums der Wert 105 vorgesehen werden, was den Wert der Polyolmenge auf das eingesetzte Isocyanat beschreibt.

Mit besonderen Vorteil kann für die Bildung von 100g des Polyurethanwerkstoffs für den Hartschaum eine anteilige Menge von 65 g bis 85 g und/oder von 70 g bis 80 g und/oder von 75 g bis 78 g und besonders von 77,6 g Isocyanat gebildet werden. Dieser Wert ergibt sich dabei aus der Hydroxylzahl von insbesondere 109,6 mg KOH/g.

Mit weiterem Vorteil kann zur Bildung des Polyurethanwerkstoffs vorgesehen sein, dass ein erster Katalysator insbesondere in Form eines Dibutylzinndilaurats zugegeben wird, vorzugsweise mit einer Menge von 1,5 g auf 100 g Polyol und/oder dass ein zweiter Katalysator insbesondere in Form eines Triethylamin zugegeben wird, vorzugsweise mit einer Menge von 1 g auf 100 g Polyol. Die zugegebenen Mengen der Katalysatoren können beispielsweise um weniger als 20%, vorzugsweise um weniger als 10% und besonders bevorzugt um 5% bis 2% nach oben oder unten abweichen.

Mit noch weiterem Vorteil kann ein Präpolymer bereitgestellt werden, das der Mischung insbesondere nach dem Rühren der gemischten Komponenten zugegeben wird. Insbesondere kann dem Präpolymer Wasser oder ein physikalisches Treibmittel zugegeben werden oder es ist vorgesehen, dass dem Präpolymer anschließend eine restliche Menge an Isocyanat zugegeben wird.

Die Formfüllung erfolgt vorzugsweise, bis für den Hartschaum 90% einer Reaktionszeit erreicht sind, ab der ein weiteres Aufschäumen der zusammengeführten Komponenten, also des Reaktionsgemisches, unterbleibt, diese also zumindest im Wesentlichen abgeschlossen ist. Für den Weichschaum sind es mit Abschluss der Formfüllung 60% der Reaktionszeit.

In den beiden Schalenkörpern des Schalenkoffers können voneinander unterschiedliche Schaumeinlagen vorgesehen sein. Beispielsweise kann in einem Schalenkörper eine Schaumeinlage aus einem Hartschaum und in einem weiteren Schalenkörper kann eine Schaumeinlage aus einem Weichschaum vorgesehen sein. So ist es denkbar, dass in wenigstens einem der Schalenkörper zumindest eine weitere Schaumeinlage aus Weichschaum angeordnet wird, die aus einem abweichenden Polyurethanwerkstoff gebildet wird, beispielsweise aus einem Reaktionsgemisch zumindest aufweisend Polyol und Isocyanat, und wobei das Polyol zur Bildung des Reaktionsgemisches mit einer Hydroxylzahl von 25 mg KOH/g bis 60 mg KOH/g und/oder von 30 mg KOH/g bis 50 mg KOH/g und/oder von 35 mg KOH/g bis 46 mg KOH/g und/oder von 41 mg KOH/g bereitgestellt wird, wobei das Reaktionsgemisch abschließend zu einem Weichschaum aufschäumt, der weicher ist als der Hartschaum.

Das Polyol für die Bildung der weiteren Schaumeinlage aus einem Weichschaum kann mit einem Molekulargewicht von 2400 bis 3000 g/mol und/oder 2600 bis 2800 g/mol und/oder 2650 bis 2750 g/mol und bevorzugt von 2700 g/mol bereitgestellt werden.

Zur Bildung der weiteren Schaumeinlage aus einem Weichschaum kann für die Herstellung des Polyurethanwerkstoffs eine Menge an Isocyanat bereitgestellt werden, die für 100g an Polyurethanwerkstoff etwa 40g bis 70g und/oder 50g bis 65g und/oder 53g bis 60g und bevorzugt 57,05g Isocyanat beträgt.

So ist es vorgesehen, dass der Schalenkörper einen im Schalenkörper definierbaren Innenraum zumindest teilweise umschließt, wobei im Innenraum wenigstens abschnittsweise oder lokal ein Hinterschnittbereich gebildet ist, in den die Schaumeinlage zumindest teilweise hineinragt. Mit der Bildung wenigstens eines Hinterschnittbereiches wir die selbsthaltende Anordnung der Schaumeinlage im Schalenkörper durch einen geometrischen Formschluss erzeugt, wobei der Hinterschnittbereich so bemessen sein kann, dass unter Aufbringung einer Entnahmekraft die Schaumeinlage aus dem Schalenkörper entnommen werden kann, ohne den Schalenkörper und die Schaumeinlage zu zerstören.

Erfindungsgemäß ist der Hinterschnittbereich zumindest teilweise mittels einer Haltestruktur gebildet, die in den Innenraum hineinragt. Die Haltestruktur ist besonders vorteilhaft im Bereich der Seitenwände des Schalenkörpers angebracht, die einen im Wesentlichen planen Bodenbereich umschließen. So kann der Halteeffekt der zumindest einen Haltestruktur besonders gut genutzt werden.

Mit weiterem Vorteil ist die Haltestruktur als eine von der Innenseite des Schalenkörpers abragende Lamelle oder als ein von der Innenseite abragender, abschnittsweiser oder umlaufender Kragen ausgebildet. Beispielsweise können an zwei sich gegenüber liegenden Seitenwänden oder an allen vier Seitenwänden jeweilige Lamellen angeordnet sein und in den Innenraum der Schalenköper hineinragen, sodass ein besonders guter Halteeffekt für die Schaumeinlage im Schalenkörper entsteht. Der Hinterschnittbereich wird dann besonders einfach mit dem Polyurethanwerkstoff aufgefüllt, wenn das Reaktionsgemisch direkt in den Schalenkörper eingegeben wird und dieses direkt im Schalenkörper aufschäumt. So kann der Polyurethanwerkstoff den oder die Hinterschnittbereiche gewissermaßen hinterschäumen.

Auch ist es denkbar, dass wenigstens einer der Schalenkörper einen oberseitigen Rand aufweist, an dem der Kragen wenigstens abschnittsweise oder vollständig umlaufend und nach innen ragend ausgebildet ist und eine Fuge zwischen dem zumindest einen Schalenkörper und der Schaumeinlage überdeckt. Ein oberseitiger Kragen, der nach innen weisend und insbesondere mit dem Rand des Schalenkörpers abschließend ausgebildet ist, bietet optische Vorteile, da die Fuge und insbesondere ein Spalt zwischen dem Schalenkörper und der Schaumeinlage durch den Kragen nicht mehr sichtbar sind.

Zusätzlich oder alternativ zu einer Haltestruktur wie einer Lamelle oder einem Kragen kann vorgesehen sein, dass die Schalenkörper wenigstens eine Hinterschnittkontur aufweisen, mittels der der Hinterschnittbereich gebildet wird. Die Hinterschnittkontur ist insbesondere in zumindest einem oder besser mehreren oder allen Seitenwänden des Schalenkörpers eingebracht, beispielsweise in Form einer Einschnürung, einer Sicke oder dergleichen. Auch damit kann ein geometrischer Formschluss des Schalenkörpers mit der Schaumeinlage erzeugt werden, sodass eine selbsthaltende Anordnung der Schaumeinlage im Schalenkörper erreicht wird.

Alternativ oder zusätzlich zum geometrischen Formschluss kann auch ein Reibschluss vorgesehen sein, mit dem eine haltende Anordnung der Schaumeinlage im Schalenkörper erreicht wird. Zur Erzeugung des Reibschlusses zwischen dem Schalenkörper und der Schaumeinlage kann beispielsweise eine lamellenartige oder domartige Anformung vorzugsweise an der Innenoberfläche des Schalenkörpers ausgebildet werden, die in den Innenraum des Schalenkörpers hineinragt und damit in die Schaumeinlage eindringt bzw. von dieser umschlossen wird.

Die Haltestruktur, insbesondere die Lamellen oder der Kragen für den geometrischen Formschluss oder für den Reibschluss, ist materialeinheitlich und einteilig mit dem Schalenkörper selbst ausgebildet und mittels eines Spritzgießverfahrens hergestellt.

Die zumindest eine Schaumeinlage kann wenigstens eine Andrückstruktur aufweisen, die von einer durch den Rand umschlossenen Öffnung zugänglich ist. Diese Andrückstruktur ist vorzugsweise in der Schaumeinlage eingebracht, die aus dem Weichschaum gebildet ist, während die Vertiefungen zur Aufnahme der zu transportierenden Gegenstände in der Schaumeinlage eingebracht, die aus dem Hartschaum gebildet ist. So können die zu transportierenden Gegenstände in der Schaumeinlage aus Hartschaum sicher gehalten werden, wenn der Schalenkoffer geschlossen wird.

Die Erfindung richtet sich weiterhin auf ein Verfahren zur Herstellung eines Schalenkoffers, wobei die zumindest eine Schaumeinlage aus Polyurethanwerkstoff aus einem Reaktionsgemisch wenigstens umfassend Polyol und Isocyanat hergestellt wird, wobei das Reaktionsgemisch in den Innenraum des zumindest einen Schalenkörpers hinein aufgeschäumt wird. Herfür kann der Schalenkörper vor der Eingabe des Reaktionsgemisches in ein Werkzeug eingelegt werden, in dem auch das Aufschäumen stattfindet. Somit können die erste und/oder zweite Schaumeinlage direkt in den ersten und/oder zweiten Schalenkörper hinein geschäumt werden.

Das Polyol zur Bildung des Reaktionsgemisches kann im Rahmen des erfindungsgemäßen Verfahrens mit einer Hydroxylzahl von 90 mg KOH/g bis 130 mg KOH/g und/oder von 100 mg KOH/g bis 120 mg KOH/g und/oder von 106 mg KOH/g bis 114 mg KOH/g und/oder von 109,6 mg KOH/g bereitgestellt werden, sodass das Reaktionsgemisch abschließend zu einem Hartschaum zumindest einer der Schaumeinlagen aufschäumt. Für die wenigstens eine weitere Schaumeinlage kann vorgesehen sein, dass das Polyol zur Bildung des Reaktionsgemisches mit einer Hydroxylzahl von 25 mg KOH/g bis 60 mg KOH/g und/oder von 30 mg KOH/g bis 50 mg KOH/g und/oder von 35 mg KOH/g bis 46 mg KOH/g und/oder von 41 mg KOH/g bereitgestellt wird, wobei das Reaktionsgemisch abschließend zu einem Weichschaum aufschäumt.

Dafür kann die Innenoberfläche des Schalenkörpers, gegen die das Reaktionsgemisch zur Bildung der Schaumeinlage aufschäumt, vor dem Aufschäumen mit einem Trennmittel behaftet werden. Auch ist es möglich, dass die Innenoberfläche zur Meidung einer chemischen Verbindung des Werkstoffes des Schalenkörpers mit der Schaumeinlage chemisch behandelt wird, um ein Anhaften der Schaumeinlage im Schalenkörper zu vermeiden.

Die zumindest eine Schaumeinlage kann wenigstens eine Vertiefung und/oder wenigstens eine Andrückstruktur aufweisen, wobei die Vertiefung und/oder die Andrückstruktur im Prozess des Aufschäumens des Reaktionsgemisches in einem Werkzeug erzeugt wird.

### BEVORZUGTES AUFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht eines Werkzeugs mit einer entsprechenden Medienvorlage zur Herstellung einer Schaumeinlage aus einem Polyurethanwerkstoff,
- Figur 2: eine schematische Ansicht eines Rundtakttisches in Verbindung mit einem entsprechenden Werkzeug gemäß Figur 1 zur Herstellung der Schaumeinlagen,
- Figur 3: eine quergeschnittene Ansicht eines schematisiert dargestellten Schalenkoffers, wobei eine Haltestruktur in Form von Lamellen an der Innenseite der Schalenkörper angeordnet ist,
- Figur 4: eine quergeschnittene Ansicht eines schematisiert dargestellten Schalenkoffers, wobei eine Haltestruktur in Form eines Kragens am Schalenkörper angeordnet ist,
- Figur 5: eine quergeschnittene Ansicht eines schematisiert dargestellten Schalenkoffers, wobei eine Haltestruktur in Form einer Hinterschnittkontur in den Schalenkörpern ausgebildet ist und
- Figur 6: eine quergeschnittene Ansicht eines schematisiert dargestellten Schalenkoffers, wobei eine Haltestruktur in Form von Anformungen auf der Innenoberfläche der Schalenkörper vorgesehen sind, um einen Reibschluss mit der Schaumeinlage zu erzeugen.

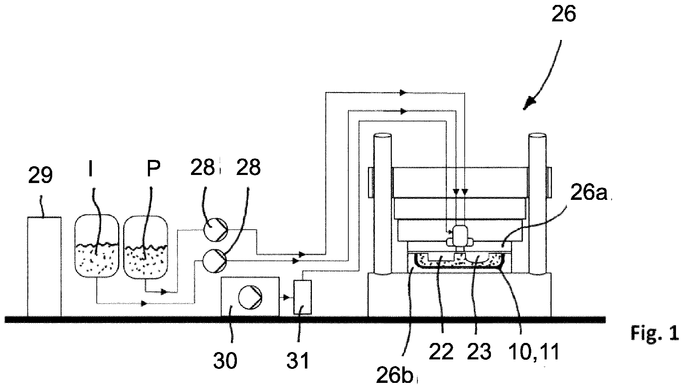

Figur 1 zeigt als wesentlichen Bestandteil einer Anlage zur Herstellung eines erfindungsgemäßen Schalenkoffers das Werkzeug 26 mit einem Werkzeugoberteil 26a und einem Werkzeugunterteil 26b, wobei das Werkzeugoberteil 26a vertikal beweglich ist und gegen das Werkzeugunterteil 26b eine nach oben gerichtete Öffnungsbewegung oder eine nach unten gerichtete Schließbewegung ausführen kann. Wird das Werkzeugoberteil 26a gegen das Werkzeugunterteil 26b geschlossen, entsteht eine Kavität, in die über einen Mischkopf 27 ein Reaktionsgemisch eingegeben werden kann. Das Reaktionsgemisch kann sodann in der Kavität aufschäumen und eine Schaumeinlage 12, 13 bilden, indem die Kavität die geometrische Form der zu erzeugenden Schaumeinlage 12, 13 aufweist.

Zur Herstellung des Reaktionsgemisches werden die Bestandteile Polyol P und Isocyanat I bereitgestellt, die schematisch in entsprechenden Behältnissen dargestellt sind. Über jeweilige den Behältnissen zugeordnete Dosiereinrichtungen 28 können das Polyol P und das Isocyanat I an den Mischkopf 27 herangeführt und im Mischkopf 27 miteinander vermischt werden, sodass anschließend die Eingabe des so gebildeten Reaktionsgemisches in die Kavität zwischen dem Werkzeugoberteil 26a und dem Werkzeugunterteil 26b erfolgen kann. Das Vermischen der Komponenten aus Polyol P und Isocyanat I und/oder einem oder mehreren Katalysatoren erfolgt im Mischkopf 27, aus dem das Reaktionsgemisch in die Kavität eingegeben wird, in der dieses anschließend aufschäumt. Die Kavität kann auch zumindest teilweise durch die Schalenkörper 10, 11 des Schalenkoffers 100 gebildet werden.

Zur Steuerung und zum Verfahren des Werkzeugoberteils 26a gegenüber dem Werkzeugunterteil 26b dient eine Anlagensteuerung 29 in Verbindung mit einer Hydraulikeinheit 30, wobei zusätzlich eine Mischkopfsteuerung 31 schematisch dargestellt ist.

Die Darstellung zeigt beispielhaft ein Werkzeugoberteil 26a mit entsprechenden geometrischen Ausgestaltungen, um die Vertiefungen 22 und 23 bereits im Schäumprozess in die Schaumeinlage 12, 13 einzubringen. Auf gleiche Weise kann beispielsweise auch eine Andrückstruktur in die Schaumeinlage eingebracht werden.

**In** der Darstellung ist im Werkzeugunterteil 26b ein Schalenkörper 10, 11 gezeigt, der vor dem Einbringen des Reaktionsgemisches in die Kavität in das Werkzeug 14 eingelegt werden kann. So kann das Reaktionsgemisch in der verbleibenden Kavität eingegeben werden, um anschließend in dieser aufzuschäumen. Dadurch wird erreicht, dass das Reaktionsgemisch bereits in dem Schalenkörper 10, 11 aufschäumt, sodass die Schaumeinlage 12, 13 nicht zuerst bereitgestellt und anschließend in den Schalenkörper 10, 11 eingebracht werden muss.

Dabei kann die Innenoberfläche des Schalenkörpers 10, 11 ein Trennmittel aufweisen oder entsprechend behandelt sein, sodass eine chemische Anhaftung des Reaktionsgemisches und schließlich der gebildeten Schaumeinlage 12, 13 an dem Werkstoff des Schalenkörpers 10, 11 vermeidet. So kann bei einem späteren Recycling die Schaumeinlage 12, 13 auf einfache Weise aus dem Schalenkörper 10, 11 entnommen werden.

In nicht näher dargestellter Weise können innenseitig im Schalenkörper 10, 11 hinterschneidende Bereiche erzeugt werden, sodass eine selbsthaltende Anordnung der Schaumeinlage 12, 13 im Schalenkörper 10, 11 erreicht werden kann. Durch einen so gebildeten geometrischen Formschluss kann sichergestellt werden, dass die Schaumeinlage 12, 13 im Schalenkörper 10, 11 einliegt und in dieser verbleibt, ohne dass Klebemittel oder dergleichen Verwendung finden muss.

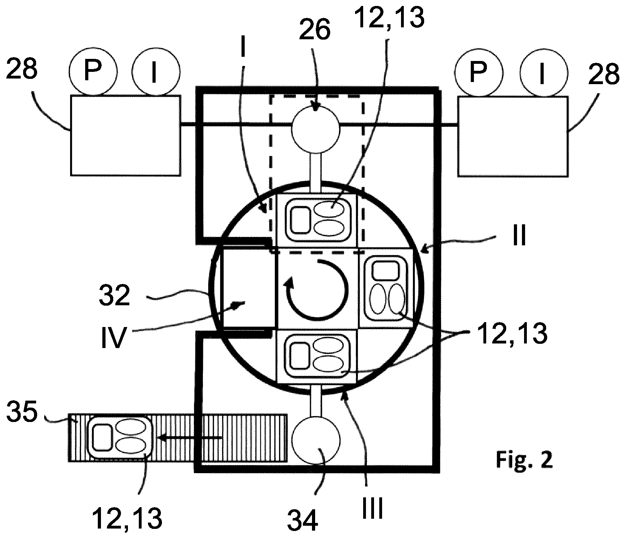

Figur 2 zeigt einen Rundtakttisch 32, der die Schaumeinlagen 12, 13 in nicht näher gezeigter Weise insbesondere direkt gemeinsam mit den Schalenkörpern 10, 11 über verschiedene Stationen I, II, III und IV hinweg bewegen kann.

Die erste Station I ermöglicht die Ausgabe des Reaktionsgemisches in das Werkzeug 26, das bereits mit den Konturen die Schaumeinlage 12, 13 als Negativ bildet. Die Ausgabe des Reaktionsgemisches erfolgt über den Mischkopf 27, wobei diese Station beispielsweise über eine Absauganlage 33 mit einem entsprechenden Filter verfügen kann. Insofern bildet die gezeigte erste Station I gemäß einer möglichen Ausführungsform das Werkzeug 26 gemäß Figur 1, sodass auch die Dosiereinrichtungen 28 mit den Medienvorlagen Polyol P und Isocyanat I als Bestandteil des Werkzeugs 26 eingerichtet sein können. Dabei sind die beiden Medienvorlagen doppelt gezeigt, und beispielsweise kann eine erste linksseitig gezeigte Dosiereinrichtung 28 mit der Bereitstellung des Polyols P und des Isocyanats I für die Bildung des Hartschaumes dienen, während eine zweite rechtsseitig dargestellte Dosiereinrichtung 28 ebenfalls mit den Medienvorlagen Polyol P und Isocyanat I die Erzeugung eines entsprechenden Reaktionsgemisches für einen Weichschaum an den Mischkopf 27 bereitstellt. Die hierfür notwendigen Steuerelemente zur Steuerung des Mischkopfes 27 sind dabei nicht näher dargestellt.

Der Rundtakttisch 32 dient zur wenigstens halbautomatisierten Handhabung der erzeugten Bauteile, nämlich der Schalenkörper 10, 11 vom Werkzeug bis an eine weiterverarbeitende Station. Diese können, wie in Zusammenhang mit Figur 1 beschrieben, auch bereits direkt in die Schalenkörper 10, 11 aufgeschäumt werden, was in Figur 2 allerdings nicht näher gezeigt ist, und insofern als mit umfasst verstanden werden kann.

Die zweite Station II betrifft eine Station, in der das Reaktionsgemisch aufschäumen kann, beispielsweise um die Kavität im Werkzeug entsprechend zu füllen, wobei in der Station II auch eine Aushärtedauer eingehalten werden kann. In der zweiten Station II entsteht folglich die formfeste Schaumeinlage 12, 13, die schließlich durch die Bewegung des Rundtakttisches 32 in die dritte Station III insbesondere gemeinsam mit dem Schalenkörper 10, 11 überführt werden kann.

In der dritten Station III ist ein Handhabungssystem 34 eingerichtet, um die im Wesentlichen formfeste Schaumeinlage 12, 13 aus dem Werkzeug zu entnehmen und auf eine Fördereinrichtung 35 zu überführen, auf der die Schaumeinlagen 12, 13 gegebenenfalls auch gemeinsam mit den bereits bereitgestellten Schalenkörpern 10, 11 der weiteren Verwendung zugeführt werden können.

Schließlich folgt die Station IV, in der das Werkzeug 26 gereinigt werden muss, was beispielsweise durch eine Bedienperson von Hand erfolgen kann.

Das Werkzeug 26 ist in den Figuren 1 und 2 lediglich schematisch dargestellt, wobei Figur 1 das Werkzeug 26 mit einem vertikal bewegbaren Werkzeugoberteil 26a zeigt, der gegen ein stationäres Werkzeugunterteil 26b schließen und öffnen kann. Im Rahmen der vorliegenden Erfindung können dabei auch Werkzeuge 26 vorgesehen werden, die über eine Gelenkverbindung zwischen dem Werkzeugoberteil und dem Werkzeugunterteil verfügen, und es können in einem solchen Werkzeug auch mehrere Schaumeinlagen 12, 13 gleichzeitig aufgeschäumt werden, indem über einen oder mehrere Mischköpfe das Reaktionsgemisch gleichzeitig in die mehreren Kavitäten in einem gemeinsamen Werkzeug eingegeben werden kann.

Der Bestandteil Polyol P beschreibt im vorliegenden Sprachgebrauch eine Polyolmischung, die Polyol, Additive und Waser umfassen kann. Auch kann das Polyol P sowohl für den Weichschaum als auch für den Hartschaum bereits eine Menge an Präpolymer aufweisen, auch wenn dieses für die Herstellung eines Hartschaumes der vorgegebenen Wassermenge noch einmal in einer separierten Menge zugegeben wird.

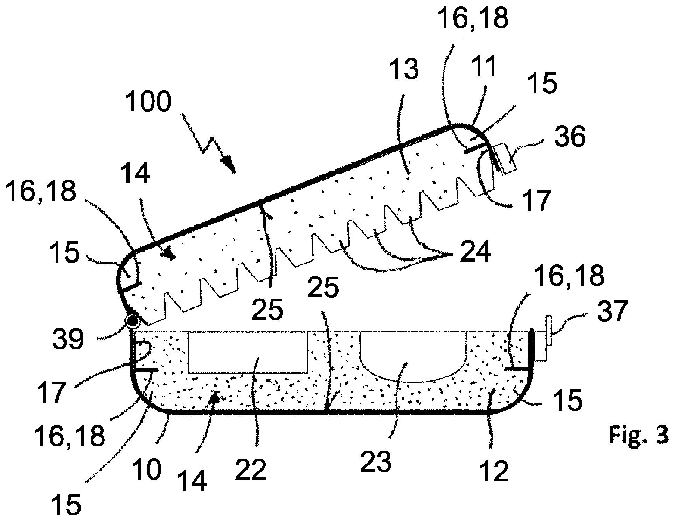

Die Figuren 3, 4, 5 und 6 zeigen jeweils schematisch einen Schalenkoffer 100 in einem Querschnitt, und der Schalenkoffer 100 weist einen ersten Schalenkörper 10 auf der Unterseite und einen über ein Gelenk 39 mit diesem verbundenen zweiten Schalenkörper 11 auf einer Oberseite auf, der gegenüber dem Schalenkörper 10 auf der Unterseite leicht geöffnet gezeigt ist. Die schematische Ansicht zeigt sowohl im unteren Schalenkörper 10 als auch im oberen Schalenkörper 11 eine jeweilige Schaumeinlage 12, 13, wobei die Schaumeinlage 12 im unteren Schalenkörper 10 einen Hartschaum aufweist, und die Schaumeinlage 13 im oberen Schalenkörper 11 weist einen Weichschaum auf. In der Schaumeinlage 12 aus Hartschaum im unteren Schalenkörper 10 sind Vertiefungen 22, 23 eingebracht, und in diese Vertiefungen 22, 23 können beispielsweise empfindliche Gegenstände wie Messinstrumente, optische Systeme, empfindliche Elektronik und dergleichen eingelegt werden, und wird der obere Schalenkörper 11 über das Verschlussoberteil 36 und das Verschlussunterteil 37 verschlossen, so gelangt eine Andrückstruktur 24 der weicheren oberen Schaumeinlage 13 gegen die eingesetzten Gegenstände in den Vertiefungen 22, 23, um diese schließlich innerhalb des Schalenkoffers 100 zu fixieren.

Die Innenoberflächen 25 der Schalenkörper 10, 11 sind mit Trennmitteln behaftet, die eine chemische Anhaftung der Schaumeinlagen 12, 13 an den Werkstoff der Schalenkörper 10, 11 unterbinden.

Gemäß dem Ausführungsbeispiel in der Figur 3 sind auf der Innenseite 17 der Schalenkörper 10, 11 in den Seitenbereichen Haltestrukturen 16 in Form von Lamellen 18 vorgesehen, die mit dem Werkstoff der Schalenkörper 10, 11 einteilig ausgebildet werden können, beispielsweise mittels eines Spritzgussverfahrens, wofür im Werkzeug entsprechend bewegte Teile vorgesehen sein können, beispielsweise Schieber oder dergleichen, mit denen die hinterschnittigen Haltestrukturen 16 erzeugt und der Schalenkörper 10, 11 anschließend noch entformt werden kann. Mittels der vorgesehenen Lamellen 18 entstehen Hinterschnittbereiche 15, mittels der die Schaumeinlagen 12, 13 in den Schalenkörpern 10, 11 formschlüssig einsitzen und sich nicht selbsttätig lösen können.

Werden die Schaumeinlagen 12, 13 in die Schalenkörper 10, 11 aufgeschäumt, indem das Reaktionsgemisch innerhalb des Werkzeuges unmittelbar in den Innenraum 14 der Schalenkörper 10, 11 eingebracht wird, können die Hinterschnittbereiche 15 für einen geometrischen Formschluss der Schaumeinlagen 12, 13 in den Schalenkörpern 10, 11 besonders einfach eingebracht werden. Insbesondere dadurch erübrigt sich die Verwendung von Klebemitteln zur haltenden Anordnung der Schaumeinlagen 12, 13 in den Schalenkörpern 10, 11. Wird der Schalenkoffer 100 recycelt, so können die Schaumeinlagen 12, 13 auf einfache Weise aus den Schalenkörpern 10, 11 entnommen werden. Die Schaumeinlagen 12, 13 können alternativ auch getrennt von den Schalenkörpern 10, 11 hergestellt werden, und ein Einsetzen und ein Entnehmen der Schaumeinlagen 12, 13 aus den Schalenkörpern 10, 11 kann durch ein beispielsweise manuelles Zusammendrücken der weichen und/oder harten Schaumeinlage 12, 13 erfolgen.

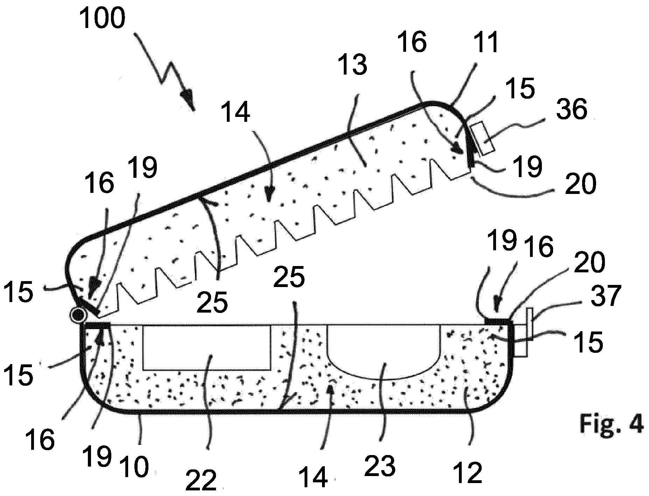

Gemäß dem Ausführungsbeispiel in der Figur 4 kann eine Haltestruktur 16 in Form eines randseitigen Kragens 19 im Bereich des oberseitigen Randes 20 der Schalenkörper 10, 11 vorgesehen sein, der beispielsweise vollständig umlaufend ausgebildet ist, sodass mit diesem Kragen 19 nicht nur die Schaumeinlage 12, 13 im Innenraum 14 der Schalenkörper 10, 11 gehalten werden kann, sondern auch ein Spalt bzw. eine Fuge zwischen der Schaumeinlage 12, 13 und dem Schalenkörper 10, 11 abgedeckt wird, was das Erscheinungsbild des Schalenkoffers 100 aufwerten kann.

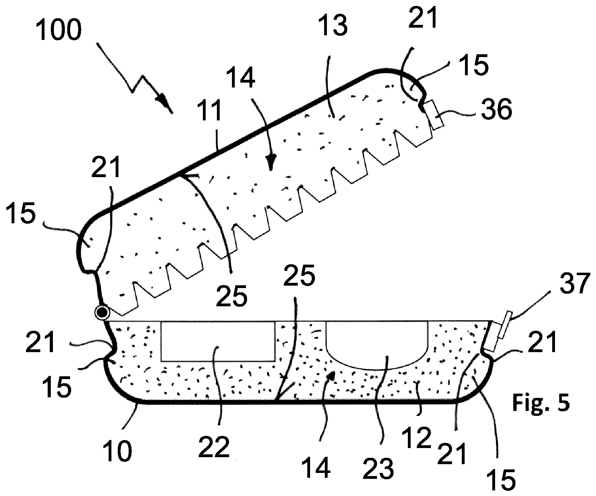

Gemäß dem Ausführungsbeispiel in der Figur 5 kann eine Haltestruktur 16 auch in Form einer Hinterschnittkontur 21 vorgesehen sein, wobei die Hinterschnittkontur 21 im Schalenkörper 10, 11 selbst eingebracht ist und einen beispielsweise umlaufenden Hinterschnittbereich 15 in den Seitenbereichen der Schalenkörper 10, 11 bildet. Die Hinterschnittkontur 21 ist beispielsweise als eine Einschnürung oder eine Versickung in der seitlichen Wandung der Schalenkörper 10, 11 ausgeprägt, die von der Außenseite der Schalenkörper 10, 11 sichtbar sein kann oder die nur im Innenbereich der Schalenkörper 10, 11 ausgeprägt ist und damit von der Außenseite der Schalenkörper 10, 11 nicht sichtbar ist.

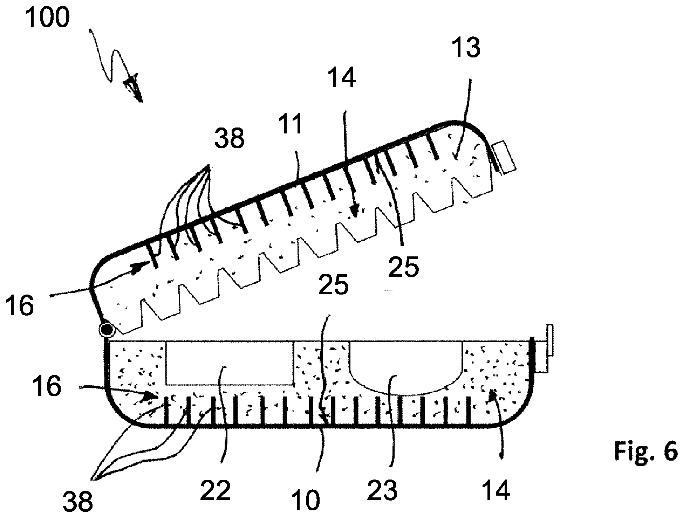

Figur 6 zeigt eine quergeschnittene Ansicht eines wiederum schematisiert dargestellten Schalenkoffers 100 mit im Übrigen gleichen Bezugszeichen, wobei eine Haltestruktur 16 in Form von Anformungen 38 auf der Innenoberfläche 25 der Schalenkörper 10, 11 vorgesehen sind, um einen Reibschluss mit der Schaumeinlage 12, 13 zu erzeugen. Die Anformungen 38 sind im Querschnitt gezeigt und können beispielsweise lamellenartig oder domartig ausgeführt sein. Die Anformungen 38 können sich in den Polyurethanwerkstoff der Schaumeinlagen 12, 13 einschneiden, wenn diese beispielsweise vorgeformt in die Schalenkörper 10, 11 eingesetzt werden. Alternativ kann der Polyurethanwerkstoff die Anformungen 38 umschließen, wenn das Reaktionsgemisch im fertigen Schalenkörper 10, 11 eingegeben und in diesem aufgeschäumt wird. So kann ein Reibschluss zwischen den Schalenkörpern 10, 11 und den Schaumeinlagen 12, 13 erzeugt werden, um entweder alleinstehend eine haltende Verbindung der Schaumeinlagen 12, 13 in den Schalenkörpern 10, 11 zu erzeugen oder um zusätzlich zu einem vorstehend beschriebenen geometrischen Formschluss eine Haltefunktion oder Fixierfunktion zu erfüllen. Die Anformungen 38 können dabei so bemaßt sein, dass die Vertiefungen in den Schaumeinlagen 12, 13 nicht beeinflusst werden. Sind die Anformungen 38 an der Innenoberfläche 25 im Bereich der Bodenebene senkrecht von der Innenoberfläche 25 hervorstehend ausgebildet, kann das Spritzgusswerkzeug zur Herstellung der Schalenkörper 10, 11 einfacher ausgeführt werden als wenn die Haltestruktur 16 Hinterschnitte erzeugt, um einen geometrischen Formschluss zwischen der Schaumeinlage 12, 13 und dem Schalenkörper 10, 11 zu erzeugen. Der geometrische Formschluss zwischen der Schaumeinlage 12, 13 und dem Schalenkörper 10, 11 ermöglicht hingegen eine höhere Haltekraft zwischen der Schaumeinlage 12, 13 und dem Schalenkörper 10, 11.

Das Polyol zur Bildung des Reaktionsgemisches für den Hartschaum wird mit einer Hydroxylzahl von etwa 109,6 mg KOH/g bereitgestellt, sodass das Reaktionsgemisch abschließend zu einem Hartschaum aufschäumt. Dieser Wert der Hydroxylzahl kann dabei auch leicht nach oben oder unten abweichen, etwa jeweils 10%, vorzugsweise etwa 5% oder auch nur etwa 2%. Das Polyol wird zudem insbesondere mit einem Molekulargewicht von 600 bis 1400 g/mol und/oder 800 bis 1200 g/mol und/oder 900 bis 1100 g/mol und/oder 1000 g/mol bereitgestellt. Auch ist es vorteilhaft, wenn 100 g des Polyurethanwerkstoffs aus einer anteiligen Menge von 65g bis 85g und/oder aus 70 g bis 80 g und/oder aus 75 g bis 78 g und/oder aus 77,6 g Isocyanat gebildet wird. Ferner wird ein erster Katalysator insbesondere in Form eines Dibutylzinndilaurat zugegeben, vorzugsweise mit einer Menge von 1,5 g auf 100 g Polyol und/oder es wird ein zweiter Katalysator insbesondere in Form eines Triethylamin zugegeben, vorzugsweise mit einer Menge von 1 g auf 100 g Polyol.

Das Polyol wird wenigstens teilweise aus nachwachsenden Rohstoffen bereitgestellt oder mit diesen versetzt, insbesondere umfassend natürliche Öle, Stärke, Zucker, Biopolymere und/oder Lignine, was die Verwendung von Mineralölen vermeidet.

Das Polyol zur Bildung des Reaktionsgemisches für den Weichschaum wird mit einer Hydroxylzahl von etwa 41 mg KOH/g bereitgestellt wird, sodass das Reaktionsgemisch abschließend zu einem Hartschaum aufschäumt. Dieser Wert der Hydroxylzahl kann dabei auch leicht nach oben oder unten abweichen, etwa jeweils 10%, vorzugsweise etwa 5% oder auch nur etwa 2%. Das Polyol wird zudem insbesondere mit einem Molekulargewicht von 2400 bis 3000 g/mol und/oder 2600 bis 2800 g/mol und/oder 2650 bis 2750 g/mol und/oder 2700 g/mol bereitgestellt. Auch ist es vorteilhaft, wenn zur Bildung der Schaumeinlage 13 aus Weichschaum 100 g des Polyurethanwerkstoffs hierfür aus einer anteiligen Menge von 40g bis 70 g und/oder aus 50 g bis 65 g und/oder aus 53 g bis 60 g und/oder aus 57,05 g Isocyanat gebildet wird.

Die Erfindung beschränkt sich in ihren Ausführungen nicht auf das vorstehend angegebenen bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: Schalenkoffer

- 10: Schalenkörper
- 11: Schalenkörper
- 12: Schaumeinlage
- 13: Schaumeinlage
- 14: Innenraum
- 15: Hinterschnittbereich
- 16: Haltestruktur
- 17: Innenseite
- 18: Lamelle
- 19: Kragen
- 20: oberseitiger Rand
- 21: Hinterschnittkontur
- 22: Vertiefung
- 23: Vertiefung
- 24: Andrückstruktur
- 25: Innenoberfläche
- 26: Werkzeug
- 26a: Werkzeugoberteil
- 26b: Werkzeugunterteil
- 27: Mischkopf
- 28: Dosiereinrichtung
- 29: Anlagensteuerung
- 30: Hydraulikeinheit
- 31: Mischkopfsteuerung
- 32: Rundtakttisch
- 33: Absauganlage
- 34: Handhabungssystem
- 35: Fördereinrichtung
- 36: Verschlussoberteil
- 37: Verschlussunterteil
- 38: Anformung
- 39: Gelenk

- I: Isocyanat
- P: Polyol

- I: Station zur Ausgabe des Reaktionsgemisches in das Werkzeug
- II: Station zum Aufschäumen
- III: Station zur Entnahme der aufgeschäumten Schaumeinlage
- IV: Station zur Reinigung des Werkzeugs

## Patentansprüche

1. Schalenkoffer (100) mit einem ersten Schalenkörper (10) aus einem Kunststoffwerkstoff und einem gelenkig mit diesem verbundenen zweiten Schalenkörper (11) aus einem Kunststoffwerkstoff, wobei in wenigstens einem der Schalenkörper (10, 11) zumindest eine Schaumeinlage (12, 13) eingebracht ist, wobei wenigstens eine der Schaumeinlagen (13) aus einem Polyurethanwerkstoff gebildet ist, wobei der Kunststoffwerkstoff des ersten und zweiten Schalenkörpers (10, 11) ein Polypropylen umfasst, wobei die wenigstens eine Schaumeinlage (12, 13) mittels eines geometrischen Formschlusses und/oder mittels eines Reibschlusses in zumindest einem der Schalenkörper (10, 11) selbsthaltend eingebracht ist, wobei der Schalenkörper (10, 11) einen im Schalenkörper (10, 11) definierbaren Innenraum (14) zumindest teilweise umschließt, wobei im Innenraum (14) wenigstens abschnittsweise oder lokal ein Hinterschnittbereich (15) gebildet ist, in den die Schaumeinlage (12, 13) zumindest teilweise hineinragt, wobei der Hinterschnittbereich (15) zumindest teilweise mittels einer Haltestruktur (16) gebildet ist, die in den Innenraum (14) hineinragt und wobei die Haltestruktur (16) materialeinheitlich und einteilig mit dem Schalenkörper (10, 11) mittels einer Spritzgießherstellung erzeugt ist.

2. Schalenkoffer (100) nach Anspruch 1,
**dadurch gekennzeichnet,**
**dass** die Haltestruktur (16) als eine von der Innenseite (17) des Schalenkörpers (10, 11) abragende Lamelle (18) oder als ein von der Innenseite (17) abragender, abschnittsweiser oder umlaufender Kragen (19) ausgebildet ist.

3. Schalenkoffer (100) nach Anspruch 2,
**dadurch gekennzeichnet,**
**dass** wenigstens einer der Schalenkörper (10, 11) einen oberseitigen Rand (20) aufweist, an dem der Kragen (19) wenigstens abschnittsweise oder vollständig umlaufend und nach innen ragend ausgebildet ist und eine Fuge zwischen dem zumindest einen Schalenkörper (10, 11) und der Schaumeinlage (12, 13) überdeckt.

4. Schalenkoffer (100) nach einem der vorgenannten Ansprüche,
**dadurch gekennzeichnet,**
**dass** die Schalenkörper (10, 11) wenigstens eine Hinterschnittkontur (21) aufweisen, mittels der der Hinterschnittbereich (15) gebildet wird.

5. Schalenkoffer (100) nach einem der vorgenannten Ansprüche,
**dadurch gekennzeichnet,**
**dass** die zumindest eine Schaumeinlage (12, 13) wenigstens eine Vertiefung (22, 23) aufweist, die von einer durch den Rand (20) umschlossenen Öffnung zugänglich ist.

6. Schalenkoffer (100) nach einem der vorgenannten Ansprüche,
**dadurch gekennzeichnet,**
**dass** die zumindest eine Schaumeinlage (12, 13) wenigstens eine Andrückstruktur (24) aufweist, die von einer durch den Rand (20) umschlossenen Öffnung zugänglich ist.

7. Verfahren zur Herstellung eines Schalenkoffers (100) nach einem der vorgenannten Ansprüche,
wobei
die zumindest eine Schaumeinlage (12, 13) aus Polyurethanwerkstoff aus einem Reaktionsgemisch wenigstens umfassend Polyol (P) und Isocyanat (I) hergestellt wird, wobei das Reaktionsgemisch in den Innenraum (14) des zumindest einen Schalenkörpers (10, 11) hinein aufgeschäumt wird.

8. Verfahren zur Herstellung eines Schalenkoffers (100) nach Anspruch 7,
**dadurch gekennzeichnet,**
**dass** zur Erzeugung des Reibschlusses zwischen dem Schalenkörper (10, 11) und der Schaumeinlage (12, 13) eine lamellenartige oder domartige Anformung (38) ausgebildet ist, die in den Innenraum (14) des Schalenkörpers (10, 11) hineinragt und die in die Schaumeinlage (12, 13) eindringt bzw. von dieser umschlossen wird.

9. Verfahren zur Herstellung eines Schalenkoffers (100) nach Anspruch 7 oder 8,
**dadurch gekennzeichnet,**
**dass** das Polyol (P) zur Bildung des Reaktionsgemisches mit einer Hydroxylzahl von 25 mg KOH/g bis 60 mg KOH/g und/oder von 30 mg KOH/g bis 50 mg KOH/g und/oder von 35 mg KOH/g bis 46 mg KOH/g und/oder von 41 mg KOH/g bereitgestellt wird, wobei das Reaktionsgemisch abschließend zu einem Weichschaum zumindest einer der Schaumeinlagen (12, 13) aufschäumt.

10. Verfahren zur Herstellung eines Schalenkoffers (100) nach einem der Ansprüche 7 bis 9,
**dadurch gekennzeichnet,**
**dass** die Innenoberfläche (25) des Schalenkörpers (10, 11), gegen die die Schaumeinlage (12, 13) aufschäumt, vor dem Aufschäumen mit einem Trennmittel behaftet wird oder die Innenoberfläche (25) zur Meidung einer chemischen Verbindung des Werkstoffes des Schalenkörpers (10, 11) mit der Schaumeinlage (12, 13) behandelt wird.

11. Verfahren zur Herstellung eines Schalenkoffers (100) nach einem der Ansprüche 7 bis 10,
**dadurch gekennzeichnet,**
**dass** die zumindest eine Schaumeinlage (12, 13) wenigstens eine Vertiefung (22, 23) und/oder wenigstens eine Andrückstruktur (24) aufweist, wobei die Vertiefung (22, 23) und/oder die Andrückstruktur (24) im Prozess des Aufschäumens des Reaktionsgemisches in einem Werkzeug (26) erzeugt wird.

## Claims

1. Shell case (100) with a first shell body (10) made of a plastic material and a second shell body (11) made of a plastic material and connected to the first shell body in an articulated manner, wherein at least one foam insert is inserted into at least one of the shell bodies (10, 11) (12, 13) is inserted in at least one of the shell bodies (10, 11) , wherein at least one of the foam inserts (13) is made of a polyurethane material, whereas
the plastic material of the first and second shell bodies (10, 11) comprises polypropylene, wherein the at least one foam insert (12, 13) is inserted into at least one of the shell bodies (10, 11) in a self-retaining manner by means of a geometric interlock and/or by means of a frictional interlock (10, 11) by means of a geometric positive connection and/or by means of a friction connection, wherein the shell body (10, 11) at least partially encloses an interior space (14) definable in the shell body (10, 11), wherein an undercut area (15) is formed at least in sections or locally in the interior space (14), into which the foam insert (12, 13) protrudes at least partially into the undercut area (15), wherein the undercut area (15) is formed at least partially by means of a retaining structure (16) which protrudes into the interior space (14), and wherein the retaining structure (16) is made of the same material and in one piece with the shell body (10, 11) by means of injection molding.

2. Shell case (100) according to claim 1,
**characterized in that**
the retaining structure (16) is designed as a lamella (18) projecting from the inner side (17) of the shell body (10, 11) or as a collar (19) projecting from the inner side (17) of the shell body ( ) in sections or around the circumference .

3. Shell case (100) according to claim 2,
**characterized in that**
at least one of the shell bodies (10, 11) has an upper edge (20) at which the collar (19) is formed at least in sections or completely circumferentially and protruding inwardly and covers a joint between the at least one shell body (10, 11) and the foam insert (12, 13).

4. Shell case (100) according to one of the preceding claims,
**characterized in that**
the shell bodies (10, 11) have at least one undercut contour (21) by means of which the undercut area (15) is formed.

5. Shell case (100) according to one of the preceding claims,
**characterized in that**
the at least one foam insert (12, 13) has at least one recess (22, 23) which is accessible through an opening enclosed by the edge (20).

6. Shell case (100) according to one of the preceding claims,
**characterized in that**
at least one foam insert (12, 13) has at least one pressure structure (24) which is accessible through an opening enclosed by the edge (20).

7. Method for manufacturing a shell case (100) according to one of the preceding claims,
whereas
the at least one foam insert (12, 13) is made of polyurethane material from a reaction mixture comprising at least polyol (P) and isocyanate (I), wherein the reaction mixture is foamed into the interior (14) of the at least one shell body (10, 11).

8. Method for manufacturing a shell case (100) according to claim 7,
**characterized in that**
to produce the frictional lock between the shell body (10, 11) and the foam insert (12, 13), a lamellar or dome-shaped formation (38) is formed which protrudes into the interior (14) of the shell body (10, 11) and penetrates into the foam insert (12, 13) or is enclosed by it.

9. Method for manufacturing a shell case (100) according to claim 7 or 8,
**characterized in that**
the polyol (P) for forming the reaction mixture is provided with a hydroxyl number of 25 mg KOH/g to 60 mg KOH/g and/or 30 mg KOH/g to 50 mg KOH/g and/or 35 mg KOH/g to 46 mg KOH/g and/or 41 mg KOH/g, wherein the reaction mixture finally foams to form a flexible foam of at least one of the foam inserts (12, 13).

10. Method for manufacturing a shell case (100) according to one of claims 7 to 9,
**characterized in that**
the inner surface (25) of the shell body (10, 11) against which the foam insert (12, 13) foams, is coated with a release agent prior to foaming, or the inner surface (25) is treated to prevent chemical bonding of the material of the shell body (10, 11) with the foam insert (12, 13).

11. Method for manufacturing a shell case (100) according to one of claims 7 to 10,
**characterized in that**
the at least one foam insert (12, 13) has at least one recess (22, 23) and/or at least one pressing structure (24), wherein the recess (22, 23) and/or the pressing structure (24) is produced in the process of foaming the reaction mixture in a mold (26) .

## Revendications

1. Valise à coques (100) comprenant un premier corps de coque (10) en matière plastique et un deuxième corps de coque (11) en matière plastique relié de manière articulée à celui-ci, au moins un insert en mousse étant introduit dans au moins l'un des corps de coque (10, 11) (12, 13) est insérée dans au moins l'un des corps de coque (10, 11) , au moins l'un des inserts en mousse (13) étant formé d'un matériau en polyuréthane,
et voilà que le matériau plastique des premier et deuxième corps de coque (10, 11) comprend un polypropylène, la au moins une insertion en mousse (12, 13) étant introduite de manière autobloquante dans au moins l'un des corps de coque (10, 11) au moyen d'une liaison géométrique et/ou au moyen d'une liaison par friction (10, 11) de manière autobloquante, le corps de coque (10, 11) entourant au moins partiellement un espace intérieur (14) pouvant être défini dans le corps de coque (10, 11), une zone de contre-dépouille (15) étant formée au moins par sections ou localement dans l'espace intérieur (14), dans laquelle l'insert en mousse (12, 13) s'engage au moins partiellement, la zone de contre-dépouille (15) étant formée au moins partiellement au moyen d'une structure de retenue (16) qui s'engage dans l'espace intérieur (14) et la structure de retenue (16) étant réalisée d'un seul tenant avec le corps de coque (10, 11) au moyen d'un moulage par injection.

2. Valise à coques (100) selon la revendication 1,
**caractérisée en ce que**
la structure de maintien (16) est réalisée sous la forme d'une lamelle (18) faisant saillie depuis la face intérieure (17) du corps de coque (10, 11) ou sous la forme d'un collet (19) faisant saillie depuis la face intérieure (17) de l' , en partie ou sur tout le pourtour .

3. Valise à coques (100) selon la revendication 2,
**caractérisé en ce que**
moins l'un des corps de coque (10, 11) présente un bord supérieur (20) sur lequel le col (19) est formé au moins par sections ou sur tout le pourtour et en saillie vers l'intérieur et recouvre un joint entre le au moins un corps de coque (10, 11) et l'insert en mousse (12, 13).

4. Valise à coques (100) selon l'une des revendications précédentes,
**caractérisée en ce que**
les corps de coque (10, 11) présentent au moins un contour en contre-dépouille (21) qui permet de former la zone en contre-dépouille (15).

5. Valise à coques (100) selon l'une des revendications précédentes,
**caractérisé en ce que**
le fait que la au moins une insert en mousse (12, 13) présente au moins un renfoncement (22, 23) accessible par une ouverture entourée par le bord (20).

6. Valise à coques (100) selon l'une des revendications précédentes,
**caractérisé en ce que**
la au moins une insertion en mousse (12, 13) présente au moins une structure de pression (24) accessible par une ouverture entourée par le bord (20).

7. Procédé de fabrication d'une valise à coque (100) selon l'une des revendications précédentes,
et voilà que la au moins une insert en mousse (12, 13) en polyuréthane est fabriquée à partir d'un mélange réactionnel comprenant au moins du polyol (P) et de l'isocyanate (I), le mélange réactionnel étant moussé dans l'espace intérieur (14) du au moins un corps de coque (10, 11).

8. Procédé de fabrication d'une valise à coque (100) selon la revendication 7,
**caractérisé en ce que**
pour créer la liaison par friction entre le corps de coque (10, 11) et l'insert en mousse (12, 13), on forme une structure en lamelles ou en dôme (38) qui fait saillie dans l'espace intérieur (14) du corps de coque (10, 11) et qui pénètre dans l'insert en mousse (12, 13) ou est entourée par celui-ci.

9. Procédé de fabrication d'une valise à coque (100) selon la revendication 7 ou 8,
**caractérisé en ce que**
le polyol (P) destiné à former le mélange réactionnel a un indice d'hydroxyle compris entre 25 mg de KOH/g et 60 mg de KOH/g et/ou entre 30 mg de KOH/g et 50 mg de KOH/g et/ou entre 35 mg de KOH/g et 46 mg de KOH/g, le mélange réactionnel moussant ensuite pour former une mousse souple d'au moins l'un des inserts en mousse (12, 13).

10. Procédé de fabrication d'une valise à coque (100) selon l'une des revendications 7 à 9,
**caractérisé en ce que**
la surface intérieure (25) du corps de coque (10, 11), contre laquelle l'insert en mousse (12, 13) mousse, est recouverte d'un agent de démoulage avant le moussage ou la surface intérieure (25) est traitée pour éviter l' d'une liaison chimique entre le matériau du corps de coque (10, 11) et l'insert en mousse (12, 13).

11. Procédé de fabrication d'une valise à coque (100) selon l'une des revendications 7 à 10,
**caractérisé en ce que**
la au moins une couche de mousse (12, 13) présente au moins un renfoncement (22, 23) et/ou au moins une structure de pression (24), le renfoncement (22, 23) et/ou la structure de pression (24) étant générés lors du processus de moussage du mélange réactionnel dans un outil (26).
